# EUROPEAN PATENT APPLICATION

(11) **EP 3 985 044 A1**
(43) Date of publication of application: **20.04.2022**
(21) Application number: 21201009.4
(22) Date of filing: 05.10.2021
(51) Int. Cl.: C08G 18/09, C08G 18/18, C08G 18/79

(54) **PROCESS FOR MODIFYING ISOCYANATES**

(30) Priority: 13.10.2020 EP 20201531
(71) Applicant: BASF SE, 67056 Ludwigshafen am Rhein (DE)
(72) Inventor: Frederic, Lucas, 67056 Ludwigshafen (DE); Garve, Lennart Karl Bernhard, 67056 Ludwigshafen (DE); Pouhe, Thomas, 67056 Ludwigshafen (DE)
(74) Representative: BASF IP Association

(57) **Abstract**

A process for modifying isocyanates, in which at least one organic isocyanate having an NCO functionality of > 1 is oligomerized in the presence of at least one catalyst, characterized in that the catalyst comprises at least one salt having a cation, which contains two tetrasubstituted ammonium ions, as catalysts for the isocyanate modification

## Description

The invention relates to a process for modifying isocyanates, in which at least one organic isocyanate having an NCO functionality of > 1 is oligomerized in the presence of at least one catalyst, and to the use of such a catalyst.

The oligo- or polymerization of isocyanates, especially to form higher molecular weight oligomer mixtures having uretdione ("dimer"), isocyanurate ("trimer") and/or iminooxadiazinedione structures ("asymmetric trimer") in the molecular skeleton, has long been known. As can be seen above, the oligo- and polymerization of isocyanates are based in principle on the same chemical reactions. The reaction of a relatively small number of isocyanates with one another is referred to as oligomerization. The reaction of a relatively large number of isocyanates is referred to as polymerization. In the context of the present invention, the oligomerization or polymerization of isocyanates described above is referred to collectively as isocyanate modification or modification of isocyanates.

The modified polyisocyanates comprising free NCO groups, which optionally may also have been temporarily deactivated with blocking agents, are exceptionally high-quality starting materials for the preparation of a multiplicity of polyurethane plastics and coating compositions. A series of industrial methods for isocyanate modification have been established in which the isocyanate to be modified, usually a diisocyanate, is generally reacted by addition of catalysts and these are then rendered inactive ( deactivated) by suitable measures, when the desired degree of conversion of the isocyanate to be modified has been reached, and the polyisocyanate obtained is generally separated from the unreacted monomer. A summary of these methods from the prior art can be found in H. J. Laas et al., J. Prakt. Chem. 1994, 336, 185 ff.

Compounds with an ionic structure have proven to be effective as modification catalysts since they may be used in very low amounts, relative to the monomer to be reacted, and lead extremely rapidly to the desired result. The option of also using tetraorganylammonium or - phosphonium as cation to the anion which is catalytically active toward isocyanates, such as hydroxide, alkanoate, alkoxylate, etc., is common knowledge, although generally not explicitly emphasized as being particularly preferred; cf.: H. J. Laas et al., J. Prakt. Chem. 1994, 336, 185 ff.

Additionally known is the use of fluorides and hydrogenpolyfluorides, the latter being stable adducts of HF onto compounds containing fluoride ions, optionally also in the form of their ammonium or phosphonium salts, for the isocyanate modification, from documents including EP 962455 A1, EP 962 454 A1, EP 896 009 A1, EP 798 299 A1, EP 447 074A1, EP379 914A1, EP339 396A1, EP315 692A1, EP 295 926 A1 and EP 235 388 A1.

However, the tetraorganylanunonium and -phosphonium (hydrogenpoly)fluorides of the prior art, in the performance of the modification reaction, have the disadvantage that, when they are used, the reaction can sometimes be maintained only with continuous metered addition of catalyst, meaning that the breakdown of the catalyst in the isocyanate medium proceeds unacceptably quickly for technical purposes compared to the modification reaction.

An additional factor is that, when tetraorganylammonium (hydrogen)polyfluorides are used, an atypical reaction profile is sometimes observed, which leads to products having a much lower iminooxadiazinedione group content than in the case of a regular heat production rate profile ( cf. EP 962 455 A1). According to the teaching of EP 962 455 A1, this disadvantage was eliminated by the use of phosphonium salts, but the latter--especially at relatively high reaction temperatures-have the unacceptably high tendency to decomposition mentioned further up, and the decomposition products can have an adverse effect on process and product stability. EP 2 415 795 A1 claims, inter alia, very stable tetraorganylphosphonium (hydrogenpoly)fluorides that do not have these disadvantages, but they are not commercially available and are producible only with difficulty.

The present invention provides an improved process for isocyanate modification, in which compounds that have good commercial availability or are easily producible from inexpensive reactants are used as catalysts, these having a high catalytic activity and selectivity with simultaneously good catalyst stability.

The present invention provides a process for modifying isocyanates, in which at least one organic isocyanate having an NCO functionality of > 1 is oligomerized in the presence of at least one catalyst, characterized in that the catalyst comprises at least one salt having a cation, which contains two tetrasubstituted ammonium ions.

Especially preferred cations are 1,6-Bis-(Dimethylethylammonium)hexan, 1,6-Bis-(methylpyrrolidinium)hexan, 1,6-Bis-(dimethylisoporpylammonium)hexane, Bis(2-(dimethylpropylammonium)ethyl)ether and 1,3-Bis-(Ethyldimethylammonium)propan.

Anions used may in principle be any species known to be catalytically active with respect to isocyanates, preference being given to alkoxides, fluoride, hydrogen polyfluoride of the formula Mn+ n [F - (HF)m], hydrogensulfate, cyanide, hydroxide, alkanoate, carboxylate, heterocycles having at least one negatively charged nitrogen atom in the ring, especially azolate, imidazolate, triazolate, tetrazolate, or mixtures of these, wherein the fluorides, hydrogen-difluorides and higher polyfluorides (adducts of more than one equivalent HF onto compounds containing fluoride ions) lead in accordance with the invention to products having a high iminooxadiazinedione group content.

By the modification process of the invention, a wide range of high-quality polyisocyanates, which are therefore very valuable for the polyurethane sector, is very generally obtainable in a simple manner. Depending on the starting (di)isocyanate used and the reaction conditions, the process of the invention affords polyisocyanates of what is known as the isocyanate trimer type (i.e. containing isocyanurate and/or iminooxadiazinedione structures) having a low proportion of uretdione groups ("isocyanate dimers"). In the case of rising reaction temperature, the proportion of the latter in the process products generally rises, but this effect is far less marked than when phosphonium salts with identical anion are used. In the process of the invention, it may further be the case that the oligomerization is conducted in the presence of a solvent and/or additive. For performance of the process of the invention, it is possible in principle to use any known mono-, di- or polyisocyanates from the prior art, individually or in any desired mixtures with one another.

Examples include: pentamethylene diisocyanate (PDI), hexamethylene diisocyanate (HDI), 2-methylpentane 1,5-diisocyanate, 2,4,4-trimethylhexane 1,6-diisocyanate, 2,2,4-trimethylhexane 1,6-diisocyanate, 4-isocyanatomethyloctane 1,8-diisocyanate, 3( 4)-isocyanatomethyl-1-methylcyclohexyl isocyanate (IMCI), isophorone diisocyanate (IPDI). 1,3- and 1,4-bis(isocyanatomethyl)benzene (XDI). 1,3- and 1,4-bis(isocyanatomethyl)cyclohexane (H6XDI), meta-Tetramethylxylylendiisocyanate (TMXDI) ,tolylene 2,4- and 2,6-diisocyanate (TDI), bis( 4-isocyanatophenyl) methane ( 4,4'MDI), 4-isocyanatophenyl-2-isocyanatophenyl-methane (2,4'MDI) and polycyclic products obtainable by fonnaldehyde-aniline polycondensation and subsequent conversion of the resulting (poly)amines to the corresponding (poly)isocyanates (polymer MDI).

Preference is given to aliphatic diisocyanates, i.e. diisocyanates in which both NCO groups are bonded to an sp3-hybridized carbon atom.

Particular preference is given to pentamethylene diisocyanate (PDI), hexamethylene diisocyanate (HDI), 2-methylpentane 1,5-diisocyanate, 2,4,4-trimethylhexane 1,6-diisocyanate, 2,2,4-trimethylhexane 1,6-diisocyanate, 4-isocyanatomethyloctane 1,8-diisocyanate, 3( 4)-isocyanatomethyl- 1-methylcyclohexyl isocyanate (IMCI), isophorone diisocyanate (IPDI), 1,3- and 1,4-bis(isocyanatomethyl) benzene (XDI) and 1,3- and 1,4-bis(isocyanatomethyl) cyclohexane (H6XDI).

It is irrelevant by which methods the aforementioned isocyanates are generated, i.e. with or without use of phosgene.

The amount of the catalyst to be used in the process according to the invention is guided primarily by the organic isocyanate used and the desired reaction rate and is preferably between ≥0.001 and ≤5 mol %, preferably between ≥0.002 and ≤ 2 mol %, based on the sum total of the molar amounts of the isocyanate used and of the catalyst.

In the process according to the invention, the catalyst may be used undiluted or dissolved in solvents. Useful solvents are all compounds which do not react with the catalyst and are capable of dissolving it to a sufficient degree, for example optionally halogenated aliphatic or aromatic hydrocarbons, alcohols, ketones, esters and ethers. Preference is given to using alcohols.

The process according to the invention can be conducted within the temperature range from 0° C. to +250° C., preferably 20° C. to 200° C., more preferably 40° C. to 150° C., and can be interrupted at any degrees of conversion, preferably after 5% to 80%, more preferably 10% to 60%, of the isocyanate used has been converted.

Catalyst deactivation can be accomplished in principle by employing a whole series of previously described prior art methods, for example the addition of (sub- or super-) stoichiometric amounts of acids or acid derivatives ( e.g. benzoyl chloride, acidic esters of phosphorus- or sulfurcontaining acids, these acids themselves, etc., but not HF), adsorptive binding of the catalyst and subsequent removal by filtration, and other methods known to those skilled in the art.

In a further preferred embodiment, unconverted organic isocyanate is removed after deactivation of the catalyst system by any method of the prior art, for example by (thin film) distillation or extraction, and subsequently preferably reused.

The use of catalysts according to the invention allows for preparation of substantially colorless isocyanurate-containing polyisocyanates by a very simple process in very good quality and reproducibly irrespective of their preparation. The catalyst of the invention can be employed over a wide temperature range and has a uniform structure and a good solubility in the reaction mixture.

It is quite generally the case that the catalysts according to the invention, irrespective of the anion which is responsible for the catalytic activity and selectivity, are much more stable in the organic isocyanate to be converted than the prior art derivatives known from the literature.

According to a particular continuously operating embodiment of the process according to the invention, the oligomerization can be undertaken continuously. For example in a tubular reactor.

It has been found that the catalysts which are used in accordance with the invention have good catalytic activity in the trimerization of (cyclo)aliphatic diisocyanates, even those prepared by the phosgene process, and result in polyisocyanates having isocyanurate groups which have a low color number.

The process products according to the invention can be used pure or in conjunction with other prior art isocyanate derivatives, such as polyisocyanates containing uretdione, biuret, allophanate, isocyanurate and/or urethane groups, wherein the free NCO groups have optionally been deactivated with blocking agents.

The present invention further relates to the use of a salt having a cation, which contains two tetrasubstituted ammonium ions as catalysts for the oligomerization of organic isocyanates having an NCO functionality of > 1.

The examples which follow are intended to further illustrate the invention but without limiting it.

### Examples

| | |
|---|---|
| Catalyst C1 | 1,6-Bis-(dimethylethylammonium)hexane-diacetate |

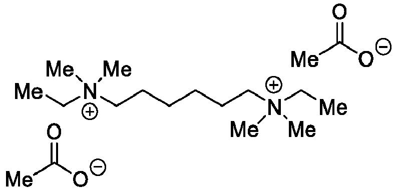

Dimethylethylamine (30.0 g) was dissolved in acetonitrile (200 mL) and heated to 30 °C. Dibromohexane (30.0 g) was slowly added over 2 h and then stirred for 1 h at 45 °C. White solid precipitated and the solid was filtered off. The solid residue was washed three times with acetone and dried in vacuo. The dibromide (40.0 g) was dissolved in water (250 mL) and the dibromide was exchanged to the dihydroxide via ion exchanger Ambersep900. The aqueous solution was (7.52% product) was neutralized with acetic acid (4.1 g; 100%). The water was removed in vacuo. To remove the whole water, the white solid was suspended in acetonitrile and the acetonitrile was removed in vacuo.

| | |
|---|---|
| Catalyst C2 | 1,6-Bis-(dimethylethylammonium)hexan-di-(2-ethylhexanoate) |

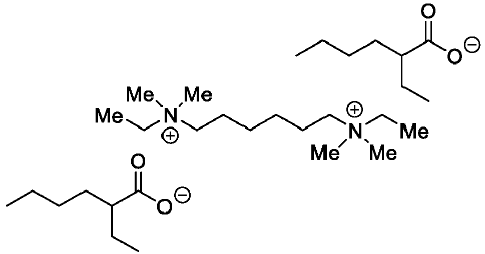

Dimethylethylamine (30.0 g) was dissolved in acetonitrile (200 mL) and heated to 65 °C. Bromopropane (73.7 g) was slowly added over 1 h and then stirred for 2 h at 75 °C. White solid precipitated and the solid was filtered off. The solid residue was washed three times with acetone and dried in vacuo. The dibromide (40.0 g) was dissolved in water (250 mL) and the dibromide was exchanged to the dihydroxide via ion exchanger Ambersep900. The aqueous solution was (7.52% product) was neutralized with 2-ethylhexanoic acid (16.4 g). The water was removed in vacuo. To remove the whole water, the white foam was suspended in isopropanol and the isopropanol was removed in vacuo.

| | |
|---|---|
| Catalyst C3 | Bis-(2-(dimethylpropylammonium)ethyl)ether-di-acetate |

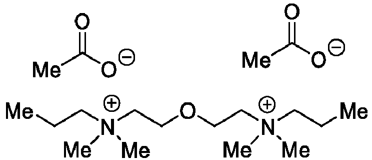

Bis-(2-dimethylaminoethyl)ether (40.0 g) was dissolved in acetonitrile (200 mL) and heated to 30 °C. Dibromohexane (30.0 g) was slowly added over 2 h and then stirred for 1 h at 45 °C. White solid precipitated and the solid was filtered off. The dibromide (40.0 g) was dissolved in water (200 mL) and the dibromide was exchanged to the dihydroxide via ion exchanger Ambersep900. The aqueous solution was (16.8% product) was neutralized with acetic acid (9.0 g). The water was removed in vacuo. To remove the whole water, the white solid was suspended in acetonitrile and the acetonitrile was removed in vacuo.

| | |
|---|---|
| Catalyst C4 | Bis-(2-(dimethylpropylammonium)ethyl)ether-di-(2-ethylhexanoate) |

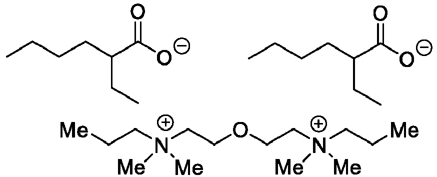

Bis-(2-dimethylaminoethyl)ether (40.0 g) was dissolved in acetonitrile (200 mL) and heated to 30 °C. Dibromohexane (30.0 g) was slowly added over 2 h and then stirred for 1 h at 45 °C. White solid precipitated and the solid was filtered off. The dibromide (40.0 g) was dissolved in water (200 mL) and the dibromide was exchanged to the dihydroxide via ion exchanger Ambersep900. The aqueous solution was (16.8% product) was neutralized with 2-ethylhanoic acid (14.7 g). The water was removed in vacuo. To remove the whole water, the white solid was suspended in acetonitrile and the acetonitrile was removed in vacuo.

| | |
|---|---|
| Catalyst C5 | "1,6-Bis-(methylpyrrolidinium)hexan-di-acetate" |

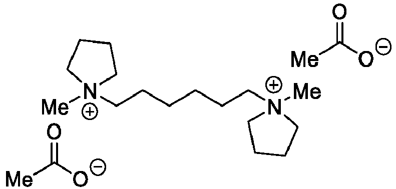

N-Methylpyrrolidine (70.0 g) was dissolved in acetonitrile (500 mL) and heated to 70 °C. Dibromohexane (83.6 g) was slowly added over 1 h and then stirred for 1 h at 70 °C. White solid precipitated and the solid was filtered off. The solid residue was washed three times with acetonitrile and dried in vacuo. The dibromide (100.0 g) was dissolved in water (400 mL) and the dibromide was exchanged to the dihydroxide via ion exchanger Ambersep900. The aqueous solution was (34.8% product) was neutralized with acetic acid (9.4 g; 100%). The water was removed in vacuo. To remove the whole water, the white solid was suspended in acetonitrile and the acetonitrile was removed in vacuo.

| | |
|---|---|
| Catalyst C6 | "1,6-Bis-(dimethylisoporpylammonium)hexane-diacetate" |

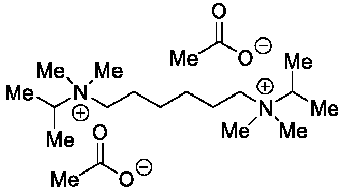

Dimethylisopropylamine (32.2 g) was dissolved in acetonitrile (200 mL) and heated to 65 °C. Dibromohexane (30.0 g) was slowly added over 1 h and then stirred for 1 h at 75 °C. White solid precipitated and the solid was filtered off. The solid residue was washed three times with acetonitrile and dried in vacuo. The dibromide (40.0 g) was dissolved in water (250 mL) and the dibromide was exchanged to the dihydroxide via ion exchanger Ambersep900. The aqueous solution was (9.25% product) was neutralized with acetic acid (7.2 g; 100%). The water was removed in vacuo. To remove the whole water, the white solid was suspended in acetonitrile and the acetonitrile was removed in vacuo.

| | |
|---|---|
| Catalyst C7 | "1,6-Bis-(dimethylisoporpylammonium)hexane-di-(2-ethylhexanoate)" |

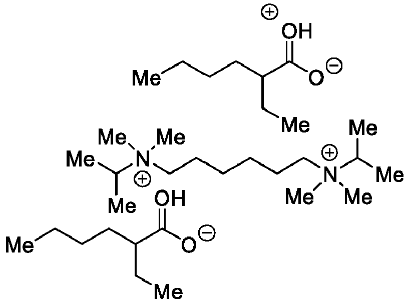

Dimethylisopropylamine (32.2 g) was dissolved in acetonitrile (200 mL) and heated to 65 °C. Dibromohexane (30.0 g) was slowly added over 1 h and then stirred for 1 h at 75 °C. White solid precipitated and the solid was filtered off. The solid residue was washed three times with acetonitrile and dried in vacuo. The dibromide (40.0 g) was dissolved in water (250 mL) and the dibromide was exchanged to the dihydroxide via ion exchanger Ambersep900. The aqueous solution was (9.25% product) was neutralized with 2-ethylhexanoic acid (11.5 g). The water was removed in vacuo. To remove the whole water, the white solid was suspended in acetonitrile and the acetonitrile was removed in vacuo.

| | |
|---|---|
| Catalyst C8 | "1,6-Bis-(1-Methylpyrrolidinium-1-yl)hexan-bis-(2-ethylhexanoate)" |

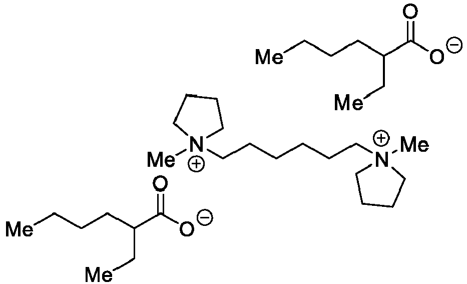

N-Methylpyrrolidine (70.0 g) was dissolved in acetonitrile (500 mL) and heated to 70 °C. Dibromohexane (83.6 g) was slowly added over 1 h and then stirred for 1 h at 70 °C. White solid precipitated and the solid was filtered off. The solid residue was washed three times with acetonitrile and dried in vacuo. The dibromide (100.0 g) was dissolved in water (400 mL) and the dibromide was exchanged to the dihydroxide via ion exchanger Ambersep900. The aqueous solution was (34.8% product) was neutralized with 2-ethylhexanoic acid (17.4 g). The water was removed in vacuo. To remove the whole water, the white solid was suspended in acetonitrile and the acetonitrile was removed in vacuo.

| | |
|---|---|
| Catalyst C9 | 1,3-Bis-(Ethyldimethylammonium)propane-diacetate |

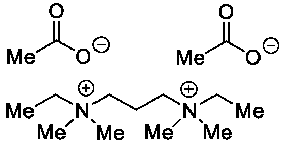

Dimethylethylamine (23.0 g) was dissolved in acetonitrile (300 mL) and heated to 30 °C. Dibromopropane (20.0 g) was slowly added over 1 h and then stirred for 1 h at 45 °C. White solid precipitated and the solid was filtered off. The solid residue was washed three times with acetonitrile and dried in vacuo. The dibromide (32.0 g) was dissolved in water (150 mL) and the dibromide was exchanged to the dihydroxide via ion exchanger Ambersep900. The aqueous solution was (1.94% product) was neutralized with acetic acid (6.4 g; 100%). The water was removed in vacuo. To remove the whole water, the white solid was suspended in isopropanol and the isopropanol was removed in vacuo.

| | |
|---|---|
| Catalyst C10 | 1,3-Bis-(Ethyldimethylammonium)propane-di-(2-ethylhexanoate)" |

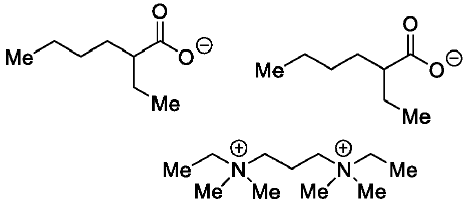

Dimethylethylamine (23.0 g) was dissolved in acetonitrile (300 mL) and heated to 30 °C. Dibromopropane (20.0 g) was slowly added over 1 h and then stirred for 1 h at 45 °C. White solid precipitated and the solid was filtered off. The solid residue was washed three times with acetonitrile and dried in vacuo. The dibromide (32.0 g) was dissolved in water (150 mL) and the dibromide was exchanged to the dihydroxide via ion exchanger Ambersep900. The aqueous solution was (1.94% product) was neutralized with 2-ethylhexanoic acid (10.1 g). The water was removed in vacuo. To remove the whole water, the white solid was suspended in acetonitrile and the acetonitrile was removed in vacuo.

| **ref** | **Structure** / **Name** |
|---|---|
| C1 | 1,6-BisDimethylethylammonium)hexan-diacetat |
| C2 | 1,6-Bis(Dimethylethylammonium)hexan-di(2-Ethylhexanoat) |
| C3 | Bis(2-(dimethylpropylammonium)ethyl)ether-di-acetat |
| C4 | Bis(2-(dimethylpropylammonium)ethyl)ether-di-(2-Ethylhexanoat) |
| C5 | "1,6-Bis(Methylpyrrolidinium)hexan-di-Acetat" |
| C6 | "1,6-Bis(Dimethylisoporpylammonium)hexan-di-Acetat" |
| C7 | "1,6-Bis(Dimethylisoporpylammonium)hexan-di-(2-Ethylhexanoat)" |
| C8 | "1,6-Bis-(1-Methylpyrrolidinium-1-yl)hexan-bis-(2-Ethylhexanoat)" |
| C9 | 1,3-Bis-(Ethyldimethylammonium)propan-diacetate |
| C10 | 1,3-Bis-(Ethyldimethylammonium)propan-di-(2-Ethylhexanoat)" |

### Inventive Example 1

400,0g of degassed and distillated HDI (Hexamethylene Dilsocyanate) were charged to a 500mL, 3-neck round bottom flask equipped with a thermometer (coupled with a temperature regulated oil-bath), mechanical stirring, a cold water condenser and nitrogen inlet. The reaction mixture was stirred and heated at 80°C. 150ppm of Catalyst C1 (45wt% in isopropanol) were then added and the temperature was controlled to not exceed 85°C. After 45 minutes, the NCO content reached 40,3% and the reaction was stopped by addition of stoichiometric amount of diethylhexylphosphate. The reaction mixture was then distillated using a thin film evaporator (160°C ― 3mbar) to remove the unreacted HDI. A polyisocyanurate with a viscosity of 3080 mPa.s and a NCO content of 21,9% was recovered.

### Inventive Example 2 - 14

In the same way described on the example 1, the catalyst C1-C10 were tested as oligomerization catalysts at different temperatures and dilutions. Results are presented in the Table below.

| **ref** | **Catalyst Solution** | **Cat (ppm)** | **T (°C)** | **Reaction Time (min)** | **NCO end reaction (%)** | **Final NCO Content (%)** | **Viscosity (mPa.s)** |
|---|---|---|---|---|---|---|---|
| Example 2 | C1 25%ig in Isopropanol | 150 | 60 | 120 | 41,4 | 22,2 | 2500 |
| Example 3 | C1 10%ig in Isopropanol | 150 | 60 | 60 | 39,5 | 22,3 | 2500 |
| Example 4 | C2 35%ig in Isopropanol | 300 | 60 | 60 | 41,6 | 22,4 | 2100 |
| Example 5 | C2 35%ig in Isopropanol | 200 | 80 | 105 | 40,8 | 22,3 | 2600 |
| Example 6 | C3 45%ig in Isopropanol | 300 | 60 | 90 | 40,0 | 22,2 | 2700 |
| Example 7 | C4 35%ig in Isopropanol | 300 | 60 | 90 | 41,3 | 22,1 | 2400 |
| Example 8 | C5 45%ig in Isopropanol | 300 | 60 | 90 | 40,4 | 20,9 | 3000 |
| Example 9 | C6 45%ig in Isopropanol | 300 | 60 | 105 | 40,0 | 22,2 | 2900 |
| Example 10 | C7 35%ig in Isopropanol | 300 | 60 | 120 | 40,3 | 21,4 | 2800 |
| Example 11 | C8 35%ig in Isopropanol | 300 | 60 | 95 | 38,5 | 22,5 | 2100 |
| Example 12 | C9 35%ig in Isopropanol | 300 | 60 | 210 | 41,4 | 22,0 | 3200 |
| Example 13 | C10 35%ig in Isopropanol | 300 | 60 | 110 | 40,9 | 22,1 | 2050 |

## Claims

1. A process for modifying isocyanates, in which at least one organic isocyanate having an NCO functionality of > 1 is oligomerized in the presence of at least one catalyst, **characterized in that** the catalyst comprises at least one salt having a cation, which contains two tetrasubstituted ammonium ions.

2. The process as claimed in claim 1, **characterized in that** the cation is selected from the group consisting of 1,6-Bis-(Dimethylethylammonium)hexan, 1,6-Bis-(methylpyrrolidi-nium)hexan, 1,6-Bis-(dimethylisoporpylammonium)hexane, Bis(2-(dimethylpropylammo-nium)ethyl)ether and 1,3-Bis-(Ethyldimethylammonium)propan..

3. The process as claimed in any of the preceding claims, **characterized in that** the anion of the polycationic salt is selected from alkoxides, fluoride, hydrogen polyfluoride of the formula Mn+ n [F - (HF)m], hydrogensulfate, cyanide, hydroxide, alkanoate, carboxylate, heterocycles having at least one negatively charged nitrogen atom in the ring, especially azolate, imidazolate, triazolate, tetrazolate, or mixtures of these).

4. The process as claimed in any of the preceding claims, **characterized in that** the oligomerization is conducted in the presence of a solvent and/or additive.

5. The process as claimed in any of the preceding claims, **characterized in that** the organic isocyanate is selected from aliphatic diisocyanates, especially from pentamethylene diisocyanate, hexamethylene diisocyanate, 2-methylpentane 1,5-diisocyanate, 2,4,4-trimethylhexane 1,6-diisocyanate, 2,2,4-trimethylhexane 1,6-diisocyanate, 4-isocyanatomethyloctane 1,8-diisocyanate, 3( 4)-isocyanatomethyl-l-methylcyclohexyl isocyanate, isophorone diisocyanate, 1,3- and 1,4-bis(isocyanatomethyl)benzene, 1,3- and 1,4-bis(isocyanatomethyl) cyclohexane or mixtures of these.

6. The process as claimed in any of the preceding claims, **characterized in that** the catalyst is used in an amount between ≥0.001 and ≤5 mol %, preferably between ≥0.002 and ≤2 mol %, based on the sum total of the molar amounts of the isocyanate used and of the catalyst.

7. The process as claimed in any of the preceding claims, **characterized in that** the process is conducted within the temperature range from 0° C. to 250° C., preferably 20 to 200° C., more preferably 40 to 150° C.

8. The process as claimed in any of the preceding claims, **characterized in that** the oligomerization is stopped after 5% to 80% by weight of the organic isocyanate used has been converted, preferably 10% to 60% by weight.

9. The process as claimed in claim 8, **characterized in that** the oligomerization is stopped by deactivating the catalyst, especially by addition of an acid or an acid derivative such as benzoyl chloride, an acidic ester of phosphorus or sulfur-containing acids, these acids themselves, adsorptive binding of the catalyst and subsequent removal by filtration or combinations thereof.

10. The process as claimed in claim 8 or 9, **characterized in that** unconverted organic isocyanate is removed from the reaction mixture.

11. The process as claimed in any of the preceding claims, **characterized in that** the modified isocyanates contain isocyanurate groups.

12. The use of a salt having a cation, which contains two tetrasubstituted ammonium ions as catalysts for the oligomerization of organic isocyanates having an NCO functionality of > 1.
